# EUROPEAN PATENT APPLICATION

(11) **EP 4 550 652 A1**
(43) Date of publication of application: **07.05.2025**
(21) Application number: 22948330.0
(22) Date of filing: 29.06.2022
(51) Int. Cl.: H02M 7/219, H02M 1/36, H02M 3/156

(54) **VOLTAGE CONVERSION CIRCUIT, CONTROL METHOD FOR VOLTAGE CONVERSION CIRCUIT, AND ENERGY STORAGE APPARATUS**

(71) Applicant: EcoFlow Inc., Shenzhen, Guangdong 518000 (CN)
(72) Inventor: ZHAO, Mi, Shenzhen, Guangdong 518000 (CN); TONG, Wenping, Shenzhen, Guangdong 518000 (CN)
(74) Representative: Appelt, Christian W.
(86) International application number: PCT/CN2022/102108
(87) International publication number: WO 2024/000210

(57) **Abstract**

A voltage conversion circuit includes: an AC/DC conversion unit, a DC/DC conversion unit, a first control unit, and a second control unit. The AC/DC conversion unit is connected to the DC/DC conversion unit through a direct current bus. The first control unit is configured to obtain a bus voltage on the direct current bus, and generate a first control signal when the bus voltage is less than a first voltage threshold; and the second control unit is configured to enter a heavy load mode when the first control signal is received, and output a first drive signal to the DC/DC conversion unit, where a duty cycle of the first drive signal is greater than a duty cycle of a drive signal output by the second control unit in a non-heavy load mode.

## Description

### TECHNICAL FIELD

This application relates to the field of power supply technologies, and in particular, to a voltage conversion circuit, a method for controlling a voltage conversion circuit, and an energy storage device.

### BACKGROUND

The description herein provides only background information related to this application, but does not necessarily constitute the exemplary technology.

In some electronic devices with built-in battery modules or energy storage devices in which battery modules are built and electric energy can flow in a bidirectional manner, voltage conversion circuits connected to the battery modules are configured to implement charging and discharging of the battery modules. By using the energy storage device as an example, electric energy of the battery module is converted by the voltage conversion circuit, to provide operating electricity for a load, namely, an electricity consuming device.

When the conventional voltage conversion circuit is not connected to a load or has a light load, energy consumption of the voltage conversion circuit is still high, resulting in a waste of the electric energy of the battery module, and also shortening a service life of an electronic component in the voltage conversion circuit. In addition, reliability of the conventional voltage conversion circuit is poor.

### SUMMARY

According to various embodiments of this application, a voltage conversion circuit, a method for controlling a voltage conversion circuit, and an energy storage device are provided.

According to a first aspect, this application provides a voltage conversion circuit, including: an AC/DC conversion unit, a DC/DC conversion unit, a first control unit, and a second control unit, where the AC/DC conversion unit is connected to the DC/DC conversion unit through a direct current bus; the first control unit is communicatively connected to the second control unit;
the first control unit is configured to obtain a bus voltage on the direct current bus, and generate a first control signal and output the first control signal to the second control unit when the bus voltage is less than a first voltage threshold; and
the second control unit is configured to enter a heavy load mode when the first control signal is received, and output a first drive signal to the DC/DC conversion unit, to drive the DC/DC conversion unit to operate, where a duty cycle of the first drive signal is greater than a duty cycle of a drive signal output by the second control unit in a non-heavy load mode.

According to a second aspect, this application provides a method for controlling a voltage conversion circuit. A voltage conversion circuit includes an AC/DC conversion unit, a DC/DC conversion unit, a first control unit, and a second control unit, where the AC/DC conversion unit is connected to the DC/DC conversion unit through a direct current bus; and the first control unit is communicatively connected to the second control unit.

The control method is applied to a first control unit, and the control method includes:
obtaining a bus voltage on the direct current bus; and
generating a first control signal and outputting the first control signal to the second control unit when the bus voltage is less than a first voltage threshold, where the first control signal is used for controlling the second control unit to enter a heavy load mode, and outputting a first drive signal to the DC/DC conversion unit, to drive the DC/DC conversion unit to operate; and a duty cycle of the first drive signal is greater than a duty cycle of a drive signal output by the second control unit in a non-heavy load mode.

According to a third aspect, this application provides an energy storage device, including a battery module and a voltage conversion circuit, where the voltage conversion circuit is the voltage conversion circuit provided in the first aspect.

Details of one or more embodiments of this application are provided in the accompanying drawings and descriptions below. Other features, objectives, and advantages of this application become apparent from the specification, the accompanying drawings, and the claims.

### BRIEF DESCRIPTION OF THE DRAWINGS

To describe technical solutions in embodiments of this application more clearly, the following briefly introduces the accompanying drawings required for describing the embodiments. Apparently, the accompanying drawings in the following description show some embodiments of this application, and a person of ordinary skill in the art may still derive other drawings from these accompanying drawings without creative efforts.
FIG. 1 is a schematic block diagram of a voltage conversion circuit according to an embodiment of this application;
FIG. 2 is a schematic block diagram of a voltage conversion circuit according to another embodiment of this application;
FIG. 3 is a specific circuit diagram of a voltage conversion circuit according to another embodiment of this application;
FIG. 4 is a first schematic diagram of a change of a bus voltage on a direct current bus according to an embodiment of this application;
FIG. 5 is a second schematic diagram of a change of a bus voltage on a direct current bus according to an embodiment of this application;
FIG. 6 is a third schematic diagram of a change of a bus voltage on a direct current bus according to an embodiment of this application;
FIG. 7 is a schematic diagram of steps of a method for controlling a voltage conversion circuit according to an embodiment of this application; and
FIG. 8 is a structural block diagram of an energy storage device according to an embodiment of this application.

Descriptions of reference numerals:
100: voltage conversion circuit; 11: AC/DC conversion unit; 12: DC/DC conversion unit;
C_{BUS}: energy storage unit; 13: first control unit; 14: second control unit;
15: isolated communication unit; U1: first chip; U2: second chip; and 200: battery module.

### DETAILED DESCRIPTION

The following clearly and completely describes the technical solutions in the embodiments of this application with reference to the accompanying drawings in the embodiments of this application. Apparently, the described embodiments are some embodiments of this application rather than all of the embodiments. All other embodiments obtained by a person of ordinary skill in the art based on the embodiments of this application without creative efforts fall within the protection scope of this application.

The following describes some implementations of this application with reference to the accompanying drawings. The following embodiments and features in the embodiments may be mutually combined in a case that no conflict occurs.

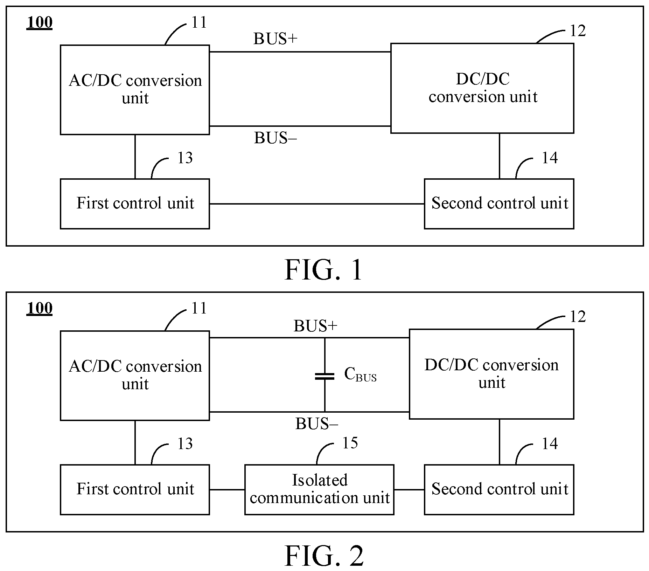

FIG. 1 is a schematic block diagram of a voltage conversion circuit according to an embodiment of this application.

As shown in FIG. 1, a voltage conversion circuit 100 includes an AC/DC conversion unit 11, a DC/DC conversion unit 12, a first control unit 13, and a second control unit 14. The AC/DC conversion unit 11 is connected to the DC/DC conversion unit 12 through a direct current bus (BUS+ and BUS-). The first control unit 13 is communicatively connected to the second control unit 14.

The first control unit 13 is configured to obtain a bus voltage on the direct current bus (BUS+ and BUS-), and generate a first control signal and output the first control signal to the second control unit 14 when the bus voltage is less than a first voltage threshold.

The second control unit 14 is configured to enter a heavy load mode when the first control signal is received, and output a first drive signal to the DC/DC conversion unit 12, to drive the DC/DC conversion unit 12 to operate. A duty cycle of the first drive signal is greater than a duty cycle of another drive signal output by the second control unit 14 in a non-heavy load mode.

The voltage conversion circuit 100 provided in this embodiment can implement bidirectional voltage conversion and bidirectional electric energy transmission.

In an example, the voltage conversion circuit 100 is configured in an energy storage device including a battery module.

For example, when an alternating current source is used for charging the energy storage device, the AC/DC conversion unit 11 in the voltage conversion circuit 100 converts, under control of the first control unit 13, an alternating current provided by the alternating current source into a first direct current, and the DC/DC conversion unit 12 performs, under control of the second control unit 14, voltage conversion on the direct current to obtain a second direct current used for charging the battery module.

For another example, when the energy storage device is used to supply electricity to a load, the DC/DC conversion unit 12 in the voltage conversion circuit 100 performs, under control of the second control unit 14, voltage conversion on a direct current provided by the battery module, and then the first control unit 13 controls the AC/DC conversion unit 11 to convert the direct current after the voltage conversion, to obtain alternating current operating electricity available for electricity consumption of the load. When operating electricity of the load is a direct current, the second control unit 14 may alternatively control, after the load is connected, the DC/DC conversion unit 12 to perform voltage conversion on the direct current provided by the battery module, and then output direct current operating electricity.

For example, as shown in FIG. 2, electric energy may be transmitted between the AC/DC conversion unit 11 and the DC/DC conversion unit 12 through the direct current bus (BUS+ and BUS-). To adapt to voltage requirements of different electricity consuming devices on operating electricity, or to absorb a peak pulse of an electrical signal in the circuit to stabilize the voltage on the direct current bus, an energy storage unit C_{BUS} may be configured between a positive direct current bus BUS+ and a negative direct current bus BUS- of the direct current bus, to store remaining electric energy when an output of the DC/DC conversion unit 12 can meet a requirement of the load and there is the remaining electric energy, so that a voltage on the energy storage unit C_{BUS} continuously rises with the charging.

In an embodiment, the energy storage unit C_{BUS} may be a circuit independent of the AC/DC conversion unit 11 and the DC/DC conversion unit 12. Alternatively, in other embodiments, the energy storage unit C_{BUS} and the AC/DC conversion unit 11 may be used as a circuit module, or the energy storage unit C_{BUS} and the DC/DC conversion unit 12 may be used as a circuit module.

When required power of the load is large, electric energy output by the DC/DC conversion unit 12 can only meet electricity consumed by the load, and the energy storage unit C_{BUS} also synchronously supplies electricity to the load, so that the voltage on the energy storage unit C_{BUS} gradually drops, and tends to be stable. Because the energy storage unit C_{BUS} is connected in parallel between the positive direct current bus BUS+ and the negative direct current bus BUS-, the voltage on the energy storage unit C_{BUS} is equal to the voltage on the direct current bus, and a load situation of the voltage conversion circuit 100 may also be reflected according to a change of the voltage on the direct current bus.

During specific implementation, the bus voltage on the direct current bus (BUS+ and BUS-) may be sampled by configuring a corresponding voltage sampling circuit.

For example, the voltage sampling circuit may send the sampled bus voltage to a controller of a battery management system, and the first control unit 13 obtains the bus voltage from the controller of the battery management system.

For another example, the voltage sampling circuit may be directly connected to the first control unit 13, and the first control unit 13 may directly obtain the bus voltage through the voltage sampling circuit.

It should be noted that, when the voltage conversion circuit 100 is connected to an electricity consuming device, a higher requirement of the electricity consuming device on operating electricity indicates faster electricity consumption of the energy storage unit C_{BUS}. Therefore, in a time period in which the load is switched, the bus voltage on the direct current bus (BUS+ and BUS-) drops faster (or rises slower). Therefore, the first control unit 13 may further output another control signal adapted to a non-heavy load situation according to the bus voltage on the direct current bus (BUS+ and BUS-), so that the second control unit 14 may enter another control mode according to the another control signal.

During specific implementation, a limitation on a light load and a heavy load may be further predefined according to rated output power of the voltage conversion circuit 100. For example, when a ratio of required power to the rated output power of the voltage conversion circuit is less than a preset percentage, the load is defined as a light load. Otherwise, the load is defined as a heavy load. The preset percentage may be set according to an actual need, for example, set to 30%, 50%, or 60%.

For example, it is assumed that rated required power of an electricity consuming device is 1200 W, and the rated output power of the voltage conversion circuit 100 is 1500 W. When the voltage conversion circuit 100 is connected to the electricity consuming device, the rated required power of the electricity consuming device accounts for 80% of the rated output power of the voltage conversion circuit 100, and is greater than 60% of the preset percentage, and it is determined that the load situation of the voltage conversion circuit 100 is a heavy load.

For another example, it is assumed that rated required power of an electricity consuming device is 300 W, and the rated output power of the voltage conversion circuit 100 is 1500 W. When the voltage conversion circuit 100 is connected to the electricity consuming device, the rated power of the electricity consuming device accounts for 20% of the rated output power of the voltage conversion circuit 100, and is less than the preset percentage, and it is determined that the load situation of the voltage conversion circuit 100 is a light load.

For example, when electricity is supplied to a load, an alternating current is output to the load through the AC/DC conversion unit 11. The AC/DC conversion unit 11 is connected to the DC/DC conversion unit 12 through the positive direct current bus (BUS+) and the negative direct current bus (BUS-), and the first control unit 13 is communicatively connected to the second control unit 14. Therefore, the first control unit 13 can adjust an output control signal according to the bus voltage on the direct current bus (BUS+ and BUS-), to adjust a control mode of the second control unit 14, thereby adjusting an electricity supply status of the DC/DC conversion unit 12 to the energy storage unit C_{BUS}.

For example, the energy storage unit C_{BUS} may be a capacitor or another energy storage component. This is not limited in this application.

In an example, when the DC/DC conversion unit 12 outputs a first charging electrical signal under action of the first drive signal, a current value of the first charging electrical signal is greater than a current value of a charging electrical signal output by the DC/DC conversion unit 12 in the non-heavy load mode.

In another example, when the DC/DC conversion unit 12 outputs a first charging electrical signal under action of the first drive signal, a voltage value of the first charging electrical signal is greater than a voltage value of a charging electrical signal output by the DC/DC conversion unit 12 under action of another drive signal.

It should be noted that, a duty cycle is a ratio of high-level duration to low-level duration in a drive signal. A larger duty cycle of a drive signal indicates a higher proportion of a high level in a unit period of the drive signal.

In this embodiment, the duty cycle of the first drive signal is greater than the duty cycle of the drive signal output by the second control unit 14 in the non-heavy load mode. Therefore, the DC/DC conversion unit 12 supplies, under the action of the first drive signal, electricity to the external energy storage unit C_{BUS} and the load at a larger charging current or charging voltage. In this case, the voltage on the energy storage unit C_{BUS} gradually rises, and tends to be stable.

Correspondingly, in the non-heavy load mode, the voltage conversion circuit 100 charges the energy storage unit C_{BUS} at a charging current or charging voltage smaller than that in the heavy load mode, thereby reducing power consumption in the non-heavy load mode, and improving overall energy utilization.

In an embodiment, a switching frequency of the first drive signal is greater than a switching frequency of a drive signal output be the second control unit 14 in the non-heavy load mode. A switching frequency is a quantity of times that a drive signal drives a switch tube in the DC/DC conversion unit 12 to periodically change in unit time.

In this embodiment, a larger switching frequency of a drive signal indicates that the DC/DC conversion unit 12 supplies, under action of the drive signal, electricity to the external energy storage unit C_{BUS} and the load at a larger charging current or charging voltage.

In an example, the voltage conversion circuit 100 is configured in an energy storage device including a battery module. For example, the voltage conversion circuit 100 is used as a transformer in the energy storage device, and the DC/DC conversion unit 12 in the voltage conversion circuit 100 is connected to the battery module. Generally, a voltage of the battery module is less than that of the alternating current source or the alternating current load connected to the AC/DC conversion unit 11, and belongs to a low-voltage side. In this case, the AC/DC conversion unit 11 and the energy storage unit C_{BUS} belong to a high-voltage side.

In the present disclosure, the second control unit 14 does not need to sample a bus voltage on the high-voltage side. Therefore, an overall voltage resistance requirement is low, so that costs of a circuit on the low-voltage side can be reduced. In addition, the second control unit 14 can perform mode switching according to a control signal output by the first control unit 13, and does not need to rely on sampling data such as the bus voltage transmitted by the AC/DC conversion unit 11 to perform mode switching control. A delay during transmission of the control signal between the first control unit 13 and the second control unit 14 is shorter than that of the sampling data, which can ensure that the second control unit 14 performs mode switching according to the load in time, thereby improving reliability of the circuit.

In some embodiments, the first control unit 13 is further configured to generate a second control signal and output the second control signal to the second control unit when the bus voltage is greater than a second voltage threshold; and the second control unit 14 is further configured to stop outputting a drive signal to the DC/DC conversion unit 12 when the second control signal is received, to control the DC/DC conversion unit 12 to stop operating.

It should be noted that, the second voltage threshold is greater than the first voltage threshold. The DC/DC conversion unit 12 stops operating, that is, stops charging the energy storage unit C_{BUS}, to ensure that the bus voltage can be kept below the second voltage threshold, thereby avoiding over-voltage damage to the energy storage unit C_{BUS} caused when the energy storage unit C_{BUS} is continuously charged. In this case, electric energy on the energy storage unit C_{BUS} supplies electricity to the load and an electricity consuming part of the energy storage unit C_{BUS}. Therefore, the voltage on the energy storage unit C_{BUS} gradually drops.

In an embodiment, the first control unit 13 is further configured to generate a third control signal and output the third control signal to the second control unit 14 when the bus voltage is less than a third voltage threshold; and the second control unit 14 is further configured to keep outputting the first drive signal to the DC/DC conversion unit 12 when the third control signal is received and the second control unit is in the heavy load mode. The third voltage threshold is greater than the first voltage threshold and less than the second voltage threshold.

After the DC/DC conversion unit 12 stops operating, the DC/DC conversion unit 12 also stops charging the energy storage unit C_{BUS}. In this case, the voltage on the energy storage unit C_{BUS} gradually drops. Therefore, when it is detected that the bus voltage is less than the third voltage threshold, the first control unit 13 outputs the third control signal to the second control unit 14. After the third control signal is received, the second control unit 14 determines, according to a status of the second control unit 14, whether to perform mode switching.

Specifically, when the second control unit 14 is in the heavy load mode, the second control unit 14 outputs the first drive signal to the DC/DC conversion unit 12, to drive the DC/DC conversion unit 12 to charge the energy storage unit C_{BUS} and the load at a charging current or charging voltage larger than that in the non-heavy load mode. In this case, the voltage on the energy storage unit C_{BUS} gradually rises, and in a time period, the bus voltage on the direct current bus still ranges from the third voltage threshold to the first voltage threshold. Therefore, in this case, the second control unit 14 keeps the heavy load mode until a region of the voltage on the energy storage unit C_{BUS} is stable. The stable voltage on the energy storage unit C_{BUS} ranges from the second voltage threshold to the third voltage threshold.

When the second control unit 14 is in the non-heavy load mode, after the third control signal is received, the second control unit 14 outputs a second drive signal to the DC/DC conversion unit 12. A duty cycle of the second drive signal is less than the duty cycle of the first drive signal. Therefore, under action of the second drive signal, the DC/DC conversion unit 12 charges the energy storage unit C_{BUS} at a charging current or charging voltage smaller than that under the action of the first drive signal, and supplies electricity to the outside when there is a load, to ensure that in the non-heavy load situation, the voltage on the energy storage unit C_{BUS} can always range from the second voltage threshold to the third voltage threshold, thereby avoiding a low response speed when a heavy load is switched to due to an excessively low voltage on the energy storage unit C_{BUS}. In this way, a response speed of the voltage conversion circuit during load switching is improved, a probability of an abnormal response during the switching is reduced, and the reliability of the voltage conversion circuit is further improved. When the second control unit 14 outputs the second drive signal, because the load is a non-heavy load, namely, a light load or no load, overall electric energy consumption power is less than external output power of the second control unit 14. Therefore, the energy storage unit C_{BUS} does not need to supply electricity to the outside, and the second control unit 14 continuously charges the energy storage unit C_{BUS} while supplying electricity to the outside, so that voltages on the two ends of the energy storage unit C_{BUS} rise, that is, the bus voltage rises. When the bus voltage rises to be greater than the second voltage threshold, the first control unit 13 outputs the second control signal to the second control unit 14. When the second control signal is received, the second control unit 14 stops outputting a drive signal to the DC/DC conversion unit 12. Therefore, the DC/DC conversion unit 12 stops operating, that is, stops charging the energy storage unit C_{BUS}.

It should be noted that, when the second control unit 14 is in the heavy load mode, a corresponding load is a heavy load. In this case, the second control unit 14 outputs the first drive signal to the DC/DC conversion unit 12, and a charging parameter for the DC/DC conversion unit 12 to charge the energy storage unit C_{BUS} under driving of the first drive signal needs to be greater than a charging parameter in another mode. Therefore, electric energy output by the DC/DC conversion unit 12 can cause the voltage on the energy storage unit C_{BUS} to slowly rise and be finally in a stable state while supplying electricity to the load. The stable voltage on the energy storage unit C_{BUS} ranges from the second voltage threshold to the third voltage threshold. Therefore, when the second control unit 14 is in the heavy load mode, even if the third control signal output by the first control unit 13 is received, the second control unit 14 does not perform control mode switching, and keeps the heavy load mode. The second control unit 14 performs control mode switching and exits the heavy load mode only when the second control signal output by the first control unit 13 is received. The second control signal is output to the second control unit 14, so that the DC/DC conversion unit 12 stops operating, thereby avoiding an over-voltage of the energy storage unit C_{BUS}.

In an embodiment, when the first control signal is received and the second control unit 14 is in the heavy load mode, the second control unit 14 keeps the heavy load mode, and does not perform control mode switching. Therefore, when load switching is frequently performed in the circuit, as long as the circuit is still in the heavy load mode, the second control unit 14 does not perform frequent switching between different modes, that is, the DC/DC conversion unit 12 is still driven by the second drive signal, thereby improving stability and reliability of the circuit.

It may be understood that, before the first control unit 13 outputs the third control signal to the second control unit 14, if the second control unit 14 is in the non-heavy load mode, when the third control signal is received, the second control unit 14 outputs the second drive signal to the DC/DC conversion unit 12.

For example, if the third control signal is received when the second control unit 14 is in the non-heavy load mode, the second control unit 14 outputs the second drive signal to the DC/DC conversion unit 12.

In an embodiment, the second control unit 14 is further configured to output the second drive signal to the DC/DC conversion unit 12 when the third control signal is received and the second control signal is in the non-heavy load mode, where a switching frequency of the second drive signal is less than the switching frequency of the first drive signal.

In an embodiment, the second control unit 14 is further configured to output the second drive signal to the DC/DC conversion unit 12 when the third control signal is received and the second control signal is in the non-heavy load mode, where a duty cycle of the second drive signal is less than the duty cycle of the first drive signal.

In another example, it is assumed that the DC/DC conversion unit 12 outputs a first charging electrical signal under the action of the first drive signal, and the DC/DC conversion unit 12 outputs a second charging electrical signal under the action of the second drive signal. A current value of the second charging electrical signal is less than a current value of the first charging electrical signal, or a voltage value of the second charging electrical signal is less than a voltage value of the first charging electrical signal.

FIG. 2 is a schematic block diagram of a voltage conversion circuit according to another embodiment of this application. As shown in FIG. 2, a difference from the embodiment corresponding to FIG. 1 lies in that, a voltage conversion circuit 100 provided in this embodiment further includes an isolated communication unit 15. A first control unit 13 transmits a first control signal, a second control signal, or a third control signal to a second control unit 14 through the isolated communication unit 15.

It may be understood that, the isolated communication unit 15 may include an isolated optical coupler, to transmit a control signal through the isolated optical coupler.

During specific implementation, the isolated optical coupler may be arranged between the first control unit 13 and the second control unit 14, so that a control signal output by the first control unit 13 can be transmitted to the second control unit 14 through the isolated optical coupler, to implement the foregoing embodiments.

The isolated optical coupler is arranged, so that electrical isolation between the first control unit 13 and the second control unit 14 can be implemented, that is, isolation between the high-voltage side and the low-voltage side can be implemented, thereby improving the stability and reliability of the circuit.

In an embodiment, a DC/DC conversion unit 12 may include a full-bridge or half-bridge voltage conversion circuit, and the second control unit 14 may control a drive signal for a switch tube on a bridge arm, to ensure that the switch tube outputs different charging currents or charging voltages. Specifically, the DC/DC conversion unit 12 can control the switch tube on the bridge arm by using PWM signals with different duty cycles and frequencies, so that the switch tube outputs different charging currents. It may be understood that, a duty cycle and a frequency of a PWM signal of the DC/DC conversion unit 12 in a first control mode are greater than a duty cycle and a frequency of a PWM signal in another mode.

It may be understood that, when the DC/DC conversion unit 12 is in different control modes, the DC/DC conversion unit 12 can provide different electrical signals for an energy storage unit C_{BUS} for charging, so that an electricity consumption requirement of a load can be met.

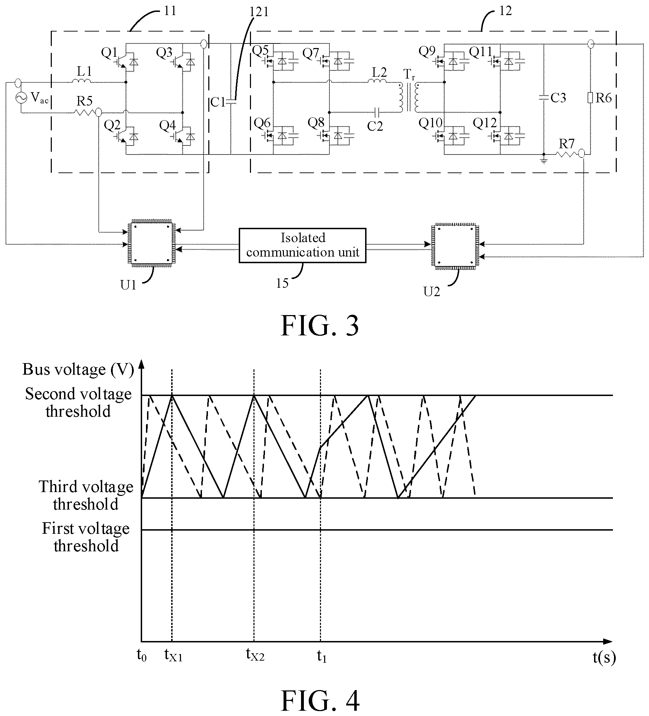

FIG. 3 is a specific circuit diagram of a voltage conversion circuit according to another embodiment of this application. As shown in FIG 3, in some embodiments, an AC/DC conversion unit 11 may be a conversion circuit including four transistors (Q1 to Q4), and a DC/DC conversion unit 12 may be a resonant network formed by a conversion circuit including eight transistors (Q5 to Q12), a transformer Tr, an inductor L2, and a capacitor C2. In this embodiment, the DC/DC conversion unit 12 is a resonant conversion circuit. In another embodiment, the DC/DC conversion unit 12 may alternatively be implemented by using another circuit structure. The transformer Tr may implement isolation between a high-voltage side and a low-voltage side. A specific operating process may be implemented in the manner provided in the foregoing embodiments, and details are not described herein again.

As shown in FIG. 3, a first control unit 13 may be a first chip U1, and a second control unit 14 may be a second chip U2.

For example, the first chip U1 may determine a load situation by obtaining a change of a bus voltage, to output different control signals to the second chip U2. The second chip U2 adjusts duty cycles and switching frequencies of drive signals according to the control signals, so that the DC/DC conversion unit 12 outputs different charging currents or charging voltages under action of different drive signals, to meet different electricity consumption requirements.

The second chip U2 is configured to enter, when a first control signal is received, a heavy load mode according to the first control signal, and generate a first drive signal to the DC/DC conversion unit 12.

The second chip U2 is configured to keep outputting the first drive signal to the DC/DC conversion unit 12 when a third control signal is received and the second chip U2 is in the heavy load mode. The DC/DC conversion unit 12 operates at a first duty cycle and/or a first switching frequency under action of the first drive signal.

The second chip U2 is further configured to generate, when the third control signal is received and the second chip U2 is in a non-heavy load mode, a second drive signal to the DC/DC conversion circuit 12 according to the third control signal. The DC/DC conversion unit 12 operates at a second duty cycle and a second switching frequency under action of the second drive signal. The first duty cycle is greater than the second duty cycle, and the first switching frequency is greater than the second switching frequency. In this way, when the second control unit 14 is in the heavy load mode, the DC/DC conversion unit 12 can achieve a charging current or charging voltage larger than, that is, a charging rate faster than, that in another mode.

In an embodiment, the first switching frequency may be 110 KHz, the first duty cycle may be 50%, the second switching frequency may be 90 KHz, and the second duty cycle may be 20%.

The second chip U2 is further configured to stop outputting a drive signal to the DC/DC conversion unit 12 when a second control signal is received, to control the DC/DC conversion unit 12 to stop operating, thereby avoiding circuit damage caused by an over-voltage on a direct current bus.

During specific implementation, the first chip U1 outputs the second control signal when the bus voltage is greater than a second voltage threshold.

For example, when the bus voltage is greater than the second voltage threshold, the DC/DC conversion unit 12 is controlled to stop operating, so that the circuit damage caused by the over-voltage on the direct current bus can be avoided, and an energy storage device can be in a discontinuous operating state.

In an embodiment, the first control signal, the second control signal, and the third control signal may all be corresponding level signals. When a control signal is transmitted through an isolated optical coupler unit, a delay is short, and the second control unit 14 can be controlled in time to perform state switching control, to ensure safety and accuracy of circuit control. In a conventional solution, the first control unit 13 needs to send acquired sampling data such as the bus voltage to the second control unit 14, and in this case, there is a long delay when the sampling data passes through an optical coupler isolation circuit. In this way, the sampling data cannot be used as control data of the second control unit 14. However, in this application, the first control unit 13 needs to send only the first control signal, the second control signal, and the third control signal that are level signals, to control the second control unit 14, so that a circuit structure is simple and stability and reliability are high.

FIG. 4 is a first schematic diagram of a change of a bus voltage on a direct current bus according to an embodiment of this application.

For example, in FIG. 4, a dashed waveform describes a change process of a bus voltage on a direct current bus obtained by using a conventional manner of controlling a voltage conversion circuit, and a solid waveform describes a change process of the bus voltage on the direct current bus in a voltage conversion circuit provided in this embodiment.

It can be seen from FIG. 4 that, the bus voltage on the direct current bus always ranges from a second voltage threshold to a third voltage threshold, and is not less than a first voltage threshold. Therefore, a load corresponding to the entire voltage conversion circuit is not a heavy load but a light load or no load. In other words, in FIG. 4, in a time period *t*₀ to *t*₁, a load situation is no load or a light load. In a moment *t*_{*X*1} and a moment *t*_{*X*2}*,* the bus voltage is greater than the second voltage threshold. In this case, a first control unit 13 in a voltage conversion circuit 100 outputs a second control signal to a second control unit 14. When the second control signal is received, the second control unit 14 stops outputting a drive signal to a DC/DC conversion unit 12, to control the DC/DC conversion unit 12 to stop operating. In this case, electric energy stored on an energy storage unit C_{BUS} is consumed due to power consumption of the circuit and power consumption caused by the light load, so that the voltage on the direct current bus drops accordingly. The first control unit 13 outputs a third control signal to the second control unit 14 when the bus voltage is less than the third voltage threshold. When the third control signal is received and the second control unit 14 is in a non-heavy load mode, the second control unit 14 outputs a second drive signal to the DC/DC conversion unit 12, so that the DC/DC conversion unit 12 supplies electricity at a duty cycle and a switching frequency less than those in a heavy load mode. In this case, because the load is light or there is no load, an output of the DC/DC conversion unit can charge the energy storage unit C_{BUS} while meeting power consumption of the DC/DC conversion unit and the power consumption of the load, so that the bus voltage is kept ranging from the second voltage threshold to the third voltage threshold.

In FIG. 4, after the moment *t*₁, the bus voltage on the direct current bus slowly rises, and it may be determined that the load changes, to be specific, the voltage conversion circuit switches from no load to the light load, or required power corresponding to the light load increases (for example, a new light load is added). As a result, overall required power of electricity consumption increases, and a capability of charging the energy storage unit C_{BUS} is reduced, so that a voltage on the energy storage unit C_{BUS} slowly rises. Because the bus voltage ranges from the second voltage threshold to the third voltage threshold in this case, although the load situation changes, the first control unit 13 does not output a new control signal to the second control unit 14, and the second control unit 14 does not change the drive signal output to the DC/DC conversion unit 12. Therefore, the DC/DC conversion unit 12 does not change a policy of charging the energy storage unit C_{BUS}, and still keeps charging the energy storage unit C_{BUS} in a third control mode. However, the conventional voltage conversion circuit uses a same control mode regardless of a light load or a heavy load, that is, supplies electricity at a same charging current or charging voltage. After a load changes, the bus voltage on the conventional voltage conversion circuit decelerates relative to that before the moment *t*₁. However, it can be seen by comparing lines in FIG. 4 that, compared with this embodiment, a deceleration rate in the conventional solution is not obvious.

It can be learned through comparison between the dashed waveform and the solid waveform after the time point *t*₁ that, when the energy storage unit C_{BUS} is charged through the direct current bus (BUS+ and BUS-), compared with that before the time point *t*₁, a rising slope of the bus voltage on the direct current bus in this embodiment greatly decreases. After the voltage on the energy storage unit C_{BUS} reaches the second voltage threshold, the first control unit 13 outputs the second control signal to the second control unit 14. After the second control signal is received, the second control unit 14 enables the DC/DC conversion unit 12 to stop charging the energy storage unit C_{BUS}. After the charging of the energy storage unit C_{BUS} is stopped, a dropping slope of the bus voltage on the direct current bus (BUS+ and BUS-) becomes steeper than that before the time *t*₁ because required power of the load increases. In addition, in this case, the dropping slope is the same as that in the conventional control manner because required power of loads are the same.

It can also be seen from the accompanying drawings that, in a non-heavy load situation, the first control unit 13 outputs the third control signal to the second control unit 14. After the third control signal is received, the second control unit 14 drives, according to the second drive signal, the DC/DC conversion unit 12 to operate, and a duty cycle and/or a switching frequency of the second drive signal is less than a duty cycle and/or a switching frequency of a first drive signal. In other words, the DC/DC conversion unit 12 is controlled to operate at a smaller duty cycle and/or switching frequency. In this way, a quantity of times of powering on/off under no load or a light load can be reduced, abnormal sound generated by the voltage conversion circuit 100 under no load or the light load can be effectively reduced, and a risk of damage to an internal component of the voltage conversion circuit 100 can be reduced.

It can also be seen from FIG. 4 that, when the voltage conversion circuit is in no load or a light load, the change of the bus voltage is a periodic change. To be specific, when the second control unit 14 is in the non-heavy load mode, the second control unit 14 periodically outputs the second drive signal to the DC/DC conversion unit 12, to drive the DC/DC conversion unit 12 to periodically charge the energy storage unit C_{BUS}. Correspondingly, the DC/DC conversion unit 12 is in a periodically operating state. To be specific, after the DC/DC conversion unit 12 charges the energy storage unit C_{BUS} for a period of time, when the bus voltage is greater than or equal to the second voltage threshold, the charging of the energy storage unit C_{BUS} is stopped. After the charging of the energy storage unit C_{BUS} is stopped for a period of time, the bus voltage drops. When the bus voltage is less than the third voltage threshold, the second control unit 14 outputs the second drive signal to the DC/DC conversion unit 12, to drive the DC/DC conversion unit 12 to operate, so that the DC/DC conversion unit 12 performs switching between the non-heavy load mode and stop operating.

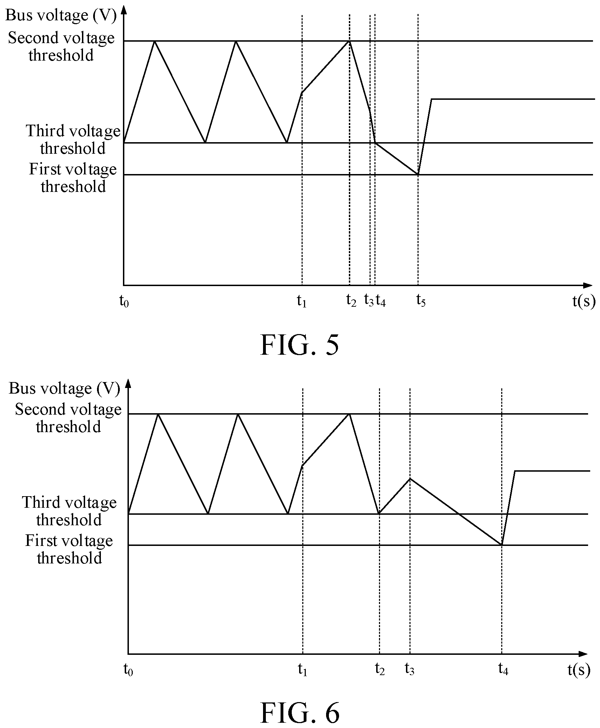

FIG. 5 is a second schematic diagram of a change of a bus voltage on a direct current bus according to an embodiment of this application. FIG. 6 is a third schematic diagram of a change of a bus voltage on a direct current bus according to an embodiment of this application. A difference between FIG. 5 and FIG. 6 lies in that, a second control unit 14 is in a different control mode when a load is switched to.

As shown in FIG. 5, in a time period *t*₀ to *t*₁ in FIG. 5, the bus voltage ranges from a second voltage threshold to a third voltage threshold, and it may be determined that a load situation of an energy storage device is no load or a light load. In the time period *t*₀ to *t*₁, the second control unit 14 performs switching between outputting a second drive signal and stopping outputting a drive signal, so that a DC/DC conversion unit 12 in a voltage conversion circuit 100 is in a discontinuous operating state.

In FIG. 5, at the moment *t*₁, the second control unit 14 is in a non-heavy load mode. To be specific, the second control unit 14 outputs the second drive signal to the DC/DC conversion unit 12, to drive the DC/DC conversion unit 12 to charge the energy storage unit C_{BUS} at a smaller charging current or charging voltage. After the moment *t*₁, a rising rate of the bus voltage decelerates, and it may be determined that the load situation changes. In this case, because the bus voltage does not drop to be less than the third voltage threshold or does not rise to be greater than the second voltage threshold, a first control unit 13 keeps outputting a third control signal. Based on that the bus voltage on the direct current bus continuously rises after the moment *t*₁, it may be determined that, although a load changes, the load is still in a light load range. In this case, a control process is similar to that in FIG. 4, and details are not described herein again.

As shown in FIG. 5, at a moment *t*₂, when the bus voltage is greater than the second voltage threshold, the first control unit 13 outputs a second control signal to the second control unit 14. The second control unit 14 stops outputting a second drive signal to the DC/DC conversion unit 12 according to the second control signal, so that the DC/DC conversion unit 12 stops charging the energy storage unit C_{BUS}.

As shown in FIG. 5, in a time period *t*₂ to *t*₃, because the second control unit 14 stops outputting a drive signal to the DC/DC conversion unit 12, the DC/DC conversion unit 12 stops charging the energy storage unit C_{BUS}. The bus voltage drops due to electricity consumption of the load and the energy storage device. However, at the moment *t*₃, a dropping rate of the bus voltage increases, and it may be considered that the load increases, resulting in an increase in required power of the load. Because the bus voltage is still greater than the third voltage threshold, the first control unit 13 keeps outputting the second control signal, until the bus voltage is less than the third voltage threshold at a moment *t*₄ and the first control unit 13 outputs the third control signal. When the third control signal is received, the second control unit 14 outputs the second drive signal to the DC/DC conversion unit 12, to drive the DC/DC conversion unit 12 to charge the energy storage unit C_{BUS}, that is, supply electricity at a smaller charging current or charging voltage. In this case, because an amount of electricity consumed by the load in the heavy load situation is greater than an amount of electricity supplied by the DC/DC conversion unit 12, electric energy on the energy storage unit C_{BUS} needs to be consumed to supply electricity to the load. Therefore, the bus voltage continuously drops, and drops to be less than a first voltage threshold at a moment *t*₅. The first control unit 13 outputs a first control signal to the second control unit 14 when the bus voltage is less than the first voltage threshold. When the first control signal is received, the second control unit 14 enters a heavy load mode, and outputs a first drive signal to the DC/DC conversion unit 12, to drive the DC/DC conversion unit 12 to increase a current value or a voltage value for charging the energy storage unit C_{BUS}. In this way, while electricity is supplied to the load, a voltage on the energy storage unit C_{BUS} also slowly rises until stable.

Referring to FIG. 6, a control process before a moment *t*₃ in FIG. 6 is similar to a control process in FIG. 4. At a moment *t*₁, a load is connected, but is still in a non-heavy load range. At the moment *t*₃, the bus voltage is in a rising phase, and the bus voltage ranges from a second voltage threshold to a third voltage threshold. To be specific, a second control unit 14 outputs a second drive signal to a DC/DC conversion unit 12, so that the DC/DC conversion unit 12 charges an energy storage unit C_{BUS} by outputting a smaller charging current or charging voltage. After the moment *t*₃, the bus voltage sharply drops, and first drops to the third voltage threshold. In this case, when it is detected that the bus voltage is less than the third voltage threshold, a first control unit 13 outputs a third control signal. However, in this case, the second control unit 14 is already in a non-heavy load mode, and therefore does not perform operating mode switching. The second control unit 14 still drives, according to the second drive signal, the DC/DC conversion unit 12 to charge the energy storage unit C_{BUS} at a smaller charging current or charging voltage. In this way, the energy storage unit C_{BUS} continuously supplies electricity to the load, and the voltage continuously drops to a first voltage threshold. In this case, according to that the bus voltage is less than the first voltage threshold, the first control unit 13 may determine that the load is switched to a heavy load. The first control unit 13 outputs a first control signal to the second control unit 14. When the first control signal is received, the second control unit 14 enters a heavy load mode, and generates a first drive signal, to drive the DC/DC conversion unit 12 according to the first drive signal, to increase a current value or a voltage value for charging the energy storage unit C_{BUS}. In this way, while electricity is supplied to the load, a voltage on the energy storage unit C_{BUS} also slowly rises until stable.

For example, in the voltage conversion circuit, the first control signal, the second control signal, and the third control signal may be different level states, so that the second control unit 14 can switch to corresponding control modes according to different control signals.

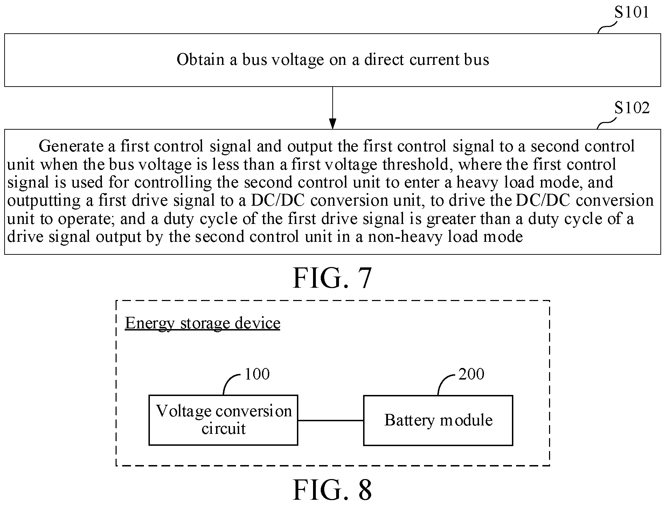

FIG. 7 is a schematic diagram of steps of a method for controlling a voltage conversion circuit according to an embodiment of this application. A voltage conversion circuit includes an AC/DC conversion unit, a DC/DC conversion unit, a first control unit, and a second control unit, where the AC/DC conversion unit is connected to the DC/DC conversion unit through a direct current bus; and the first control unit is communicatively connected to the second control unit. The control method is applied to a first control unit, and the control method includes the following steps:
S101: Obtain a bus voltage on the direct current bus.
S102: Generate a first control signal and output the first control signal to the second control unit when the bus voltage is less than a first voltage threshold, where the first control signal is used for controlling the second control unit to enter a heavy load mode, and outputting a first drive signal to the DC/DC conversion unit, to drive the DC/DC conversion unit to operate; and a duty cycle of the first drive signal is greater than a duty cycle of a drive signal output by the second control unit in a non-heavy load mode.

For example, the bus voltage on the direct current bus (BUS+ and BUS-) is obtained, a corresponding control signal is determined according to the bus voltage, and the second control unit is controlled to switch to a corresponding load mode by using the control signal, to drive the DC/DC conversion unit to operate, thereby meeting electricity supply requirements of different load situations.

In some embodiments, the method further includes: generating a second control signal when the bus voltage is greater than a second voltage threshold, where the second voltage threshold is greater than the first voltage threshold; and the second control signal is used for controlling the second control unit to stop outputting a drive signal to the DC/DC conversion unit, to control the DC/DC conversion unit to stop operating.

For example, when the bus voltage is greater than the second voltage threshold, the first control unit generates the second control signal, and controls, by using the second control signal, the second control unit to stop driving the DC/DC conversion unit, so that the DC/DC conversion unit stops charging an energy storage unit, to avoid overcharging of the energy storage unit.

It may be understood that, the method for controlling a voltage conversion circuit may be applied to the embodiments of the voltage conversion circuit 100 described above, and details are not described herein again.

During specific implementation, the first control unit 13 in the voltage conversion circuit 100 may output different control signals to the second control unit 14 according to the bus voltage on the direct current bus (BUS+ and BUS-), and the second control unit 14 adjusts corresponding control modes when the control signals are received, to adjust a current value and/or a voltage value for charging the energy storage unit. Specific implementations of the control method may be as described in the embodiments of the voltage conversion circuit 100, and details are not described herein again.

FIG. 8 is a structural block diagram of an energy storage device according to an embodiment of this application.

As shown in FIG. 8, the energy storage device includes a voltage conversion circuit 100 and a battery module 200. A DC/DC conversion unit in the voltage conversion circuit 100 is connected to the battery module 200. The voltage conversion circuit 100 is the voltage conversion circuit 100 as described above.

For example, the energy storage device includes a removable energy storage device.

For example, the battery module 200 may be an existing battery module.

It may be understood that, for the energy storage device provided in this embodiment, improvement points and specific implementations related to this application have been described in detail in the foregoing embodiments, and details are not described herein again.

In the description of this application, it should be noted that, unless otherwise explicitly specified or limited, the terms such as "install", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two elements, or an interaction relationship between two elements. A person of ordinary skill in the art may understand the specific meanings of the foregoing terms in this application according to specific situations.

Many different implementations or examples are provided in the foregoing disclosure to implement different structures of this application. To simplify the disclosure of this application, components and settings of specific examples are described above. Certainly, the components and settings are merely examples and are not intended to limit this application. In addition, in this application, reference numerals and/or reference letters may be repeated in different examples. The repetition is for the purposes of simplification and clearness, and does not indicate a relationship between various implementations and/or settings discussed. In addition, this application provides examples of various specific processes and materials, but a person of ordinary skill in the art may be aware of application of another process and/or use of another material.

In the descriptions of this specification, descriptions using reference terms "an implementation", "some implementations", "an exemplary implementation", "an example", "a specific example", or "some examples" mean that specific characteristics, structures, materials, or features described with reference to the implementation or example are included in at least one implementation or example of this application. In this specification, schematic descriptions of the foregoing terms are not necessarily with respect to the same implementation or example. In addition, the described specific characteristics, structures, materials, or features may be combined in a proper manner in any one or more implementations or examples.

The foregoing implementations are merely preferred implementations of this application, and are not intended to limit the protection scope of this application. Any insubstantial changes and replacements made by a person skilled in the art based on this application fall within the protection scope of this application.

## Claims

1. A voltage conversion circuit, comprising an AC/DC conversion unit, a DC/DC conversion unit, a first control unit, and a second control unit, wherein the AC/DC conversion unit is connected to the DC/DC conversion unit through a direct current bus; the first control unit is communicatively connected to the second control unit;
the first control unit is configured to obtain a bus voltage on the direct current bus, and generate a first control signal and output the first control signal to the second control unit when the bus voltage is less than a first voltage threshold; and
the second control unit is configured to enter a heavy load mode when the first control signal is received, and output a first drive signal to the DC/DC conversion unit, to drive the DC/DC conversion unit to operate, wherein a duty cycle of the first drive signal is greater than a duty cycle of a drive signal output by the second control unit in a non-heavy load mode.

2. The voltage conversion circuit according to claim 1, wherein a switching frequency of the first drive signal is greater than a switching frequency of the drive signal output by the second control unit in the non-heavy load mode.

3. The voltage conversion circuit according to claim 1 or 2, wherein the first control unit is further configured to generate a second control signal and output the second control signal to the second control unit when the bus voltage is greater than a second voltage threshold; and the second control unit is further configured to stop outputting a drive signal to the DC/DC conversion unit when the second control signal is received, to control the DC/DC conversion unit to stop operating.

4. The voltage conversion circuit according to claim 3, wherein the first control unit is further configured to generate a third control signal and output the third control signal to the second control unit when the bus voltage is less than a third voltage threshold; and the second control unit is further configured to keep outputting the first drive signal to the DC/DC conversion unit when the third control signal is received and the second control unit is in the heavy load mode.

5. The voltage conversion circuit according to claim 4, wherein the second control unit is further configured to output a second drive signal to the DC/DC conversion unit when the third control signal is received and the second control unit is in the non-heavy load mode, wherein a duty cycle of the second drive signal is less than the duty cycle of the first drive signal.

6. The voltage conversion circuit according to claim 4, wherein the second control unit is further configured to output a second drive signal to the DC/DC conversion unit when the third control signal is received and the second control unit is in the non-heavy load mode, wherein a switching frequency of the second drive signal is less than the switching frequency of the first drive signal.

7. The voltage conversion circuit according to claim 1, wherein the first control unit is configured to generate, in response to a discharge instruction, a corresponding control signal and output the control signal to the second control unit according to a relationship between the bus voltage and each voltage threshold.

8. The voltage conversion circuit according to claim 1, further comprising an isolated communication unit, wherein the isolated communication unit is configured to implement isolated communication between the first control unit and the second control unit.

9. A method for controlling a voltage conversion circuit, wherein a voltage conversion circuit comprises an AC/DC conversion unit, a DC/DC conversion unit, a first control unit, and a second control unit, wherein the AC/DC conversion unit is connected to the DC/DC conversion unit through a direct current bus; and the first control unit is communicatively connected to the second control unit; and
the control method is applied to the first control unit, and the control method comprises:
obtaining a bus voltage on the direct current bus; and
generating a first control signal and outputting the first control signal to the second control unit when the bus voltage is less than a first voltage threshold, wherein the first control signal is used for controlling the second control unit to enter a heavy load mode, and outputting a first drive signal to the DC/DC conversion unit, to drive the DC/DC conversion unit to operate; and a duty cycle of the first drive signal is greater than a duty cycle of a drive signal output by the second control unit in a non-heavy load mode.

10. An energy storage device, comprising a battery module, and further comprising the voltage conversion circuit according to any one of claims 1 to 8.
